Europäisches Patentamt

European Patent Office

Office européen des brevets

(19)

(11) Veröffentlichungsnummer : **0 133 890**
**B1**

(12)                    **EUROPÄISCHE PATENTSCHRIFT**

(45) Veröffentlichungstag der Patentschrift :
**11.01.89**

(51) Int. Cl.⁴ : **H 04 N   5/335**

(21) Anmeldenummer : **84107175.6**

(22) Anmeldetag : **22.06.84**

(54) **Elektrooptisches Detektorsystem zur Erzeugung elektronischer Bildinformation.**

(30) Priorität : **02.07.83 DE 3323956**

(43) Veröffentlichungstag der Anmeldung :
**13.03.85 Patentblatt 85/11**

(45) Bekanntmachung des Hinweises auf die Patenterteilung : **11.01.89 Patentblatt 89/02**

(84) Benannte Vertragsstaaten :
**DE FR GB IT**

(56) Entgegenhaltungen :
**EP--A-- 0 065 885**
**EP--A-- 0 131 387**
**1982 SID INTERNATIONAL SYMPOSIUM DIGEST OF TECHNICAL PAPERS, Society for SID Information Display, 1. Ausgabe, Mai 1982, Seiten 288-289, Lewis Winner, Coral Gables, US; K.A.HOAGLAND: "23.1/1:30 P.M.: Image-shift resolution enhancement techniques for CCD imagers"**
**PATENT ABSTRACTS OF JAPAN, Band 5, Nr. 78 (E-58)[750], 22. Mai 1981**

(73) Patentinhaber : **Bodenseewerk Gerätetechnik GmbH**
**Alte Nussdorfer Strasse 15 Postfach 1120**
**D-7770 Überlingen/Bodensee (DE)**

(72) Erfinder : **Egger, Johann-Friedrich**
**Tannenstrasse 5**
**D-7770 Überlingen 12 (DE)**
Erfinder : **Uwira, Bernd, Dr.**
**Überlingerstrasse 7**
**D-7750 Konstanz (DE)**
Erfinder : **Kordulla, Hans**
**Schillerstrasse 4**
**D-7700 Singen (DE)**

(74) Vertreter : **Weisse, Jürgen, Dipl.-Phys. et al**
**Patentanwälte Dipl.-Phys. Jürgen Weisse Dipl.-Chem. Dr. Rudolf Wolgast Bökenbusch 41 Postfach 11 03 86**
**D-5620 Velbert 11 Langenberg (DE)**

**Beschreibung**

Die Erfindung betrifft ein elektrooptisches Detektorsystem zur Erzeugung elektronischer Bildinformation, enthaltend :

(a) einen ladungsgekoppelten Mosaikdetektor, der eine Mehrzahl von rechteckigen Detektorelementen mit ersten und zweiten Seiten aufweist, welche in Spalten parallel zu den ersten Seiten und Zeilen parallel zu den zweiten Seiten angeordnet sind,

(b) wobei die Detektorelemente jeder Spalte erste Zwischenräume bilden, deren Breite im wesentlichen gleich der Länge der besagten ersten Seiten ist, und

(c) die Detektorelemente jeder Zeile zweite Zwischenräume bilden, deren Breite im wesentlichen gleich der Länge der besagten zweiten Seiten ist,

(d) ein abbildendes optisches System zur Erzeugung eines Bildes eines Gesichtsfeldes auf dem Mosaikdetektor (10), so daß jedes der Detektorelemente eine Bildinformation liefert,

(e) Bildversatzmittel, welche periodisch auf die Abbildungsmittel wirken und durch welche das Bild relativ zu dem Mosaikdetektor längs einer ge schlossenen Bahn (26) bewegbar ist.

Ein solches Detektorsystem ist bekannt durch die Literaturstelle « 1982 SID INTERNATIONAL SYMPOSIUM DIGEST OF TECHNICAL PAPERS », Society for SID Information Display, 1. Ausgabe Mai 1982, Seiten 288-289. Dort wird die Auflösung eines ladungsgekoppelten Mosaikdetektors für eine Fernsehkamera oder andere hochauflösende Bildwandler dadurch erhöht, daß durch Bildversatzmittel das Bild so verschoben wird, daß der Satz von ladungsgekoppelten Detektorelementen während aufeinanderfolgender Integrationsperioden unterschiedliche Bereiche erfaßt. Die Bildversatzmittel sind in der Druckschrift nur schematisch angedeutet.

Die EP-A 131 387 zeigt eine Anordnung, bei welcher ein Mosaikdetektor auf einer zu Schwingungen erregten Platte angeordnet ist. Ebenso ist bei einer Anordnung nach der EP-A-65 885.

Durch die JP-A-56 27 571 ist ein Mosaikdetektor bekannt, der zur Lichteinfallsrichtung geneigt ist und eine Bewegung zur Erhöhung der Auflösung ausführt. Konstruktive Einzelheiten, wie diese Bewegung erzeugt wird, sind dort nicht dargestellt.

Der Erfindung liegt die Aufgabe zugrunde, bei einem elektrooptischen Detektorsystem zur Erzeugung elektronischer Bildinformation, bei welchem Bildversatzmittel zur Erhöhung der Auflösung vorgesehen sind, eine einfache und zuverlässig arbeitende Konstruktion der Bildversatzmittel zu schaffen.

Erfindungsgemäß wird diese Aufgabe dadurch gelöst, daß

(f) das Bild durch die Bildversatzmittel längs einer rechteckigen Bahn derart bewegbar ist, daß jeder Punkt des Bildes während jeder Periode relativ zu dem Mosaikdetektor schnell von jeweils einer Ecke eines Rechtecks, dessen Seiten gleich und parallel zu den besagten ersten und zweiten Seiten sind, zu einer benachbarten Ecke bewegt und dann zwischen diesen Bewegungen jeweils für eine Zeitspanne, die wesentlich länger als die für die besagte Bewegung erforderliche Zeit ist, stillstehend gehalten wird,

(g) die Bildversatzmittel

- einen in dem abbildenden optischen System angeordneten kardanisch gelagerten Spiegel aufweisen sowie

- vier um 90° winkelversetzt um einen zentralen Schwenkpunkt des Spiegels herum angeordnete Elektromagnete, durch welche Drehmomente zur Erzeugung einer Neigung des Spiegels ausübbar sind, und

- eine Ansteuerschaltung zur aufeinanderfolgenden Erregung von jeweils einem Paar von benachbarten Elektromagneten zur Verlagerung des Spiegels und zur Halterung des Spiegels in den gewünschten Lagen und

(h) auf der Rückseite des Spiegels ein ringförmiger Anschlag vorgesehen ist, auf dem der Spiegel bei seiner nutierenden Bewegung von einer Stellung zur anderen abrollt.

Eine vorteilhafte Ausgestaltung der Erfindung ist Gegenstand des Patentanspruchs 2.

Ein Ausführungsbeispiel der Erfindung ist nachstehend unter Bezugnahme auf die zugehörigen Zeichnungen näher erläutert.

Fig. 1 zeigt schematisch in vergrößertem Maßstab einen Ausschnitt aus einem Mosaik-Detektor mit vier durch Zwischenräume getrennten Detektorelementen sowie Bildelementen, die nacheinander auf jeweils einem der Detektorelemente abgebildet werden, und die geschlossenen Bahnen, die von Punkten des Gesichtsfeldbildes beschrieben werden.

Fig. 2 zeigt einen Spiegel, der im Strahlengang eines das Gesichtsfeld auf den Mosaik-Detektor abbildenden optischen Systems angeordnet ist und die Bildversatzmittel, durch welche dem Spiegel eine schrittweise Nutationsbewegung erteilbar ist.

Fig. 3 zeigt eine Draufsicht auf die Spiegelfläche.

Fig. 4 zeigt einen Schnitt längs der Linie IV-IV von Fig. 2.

Fig. 5 veranschaulicht den Ablauf des Umschaltvorganges bei einer Anordnung nach Fig. 2 bis 4.

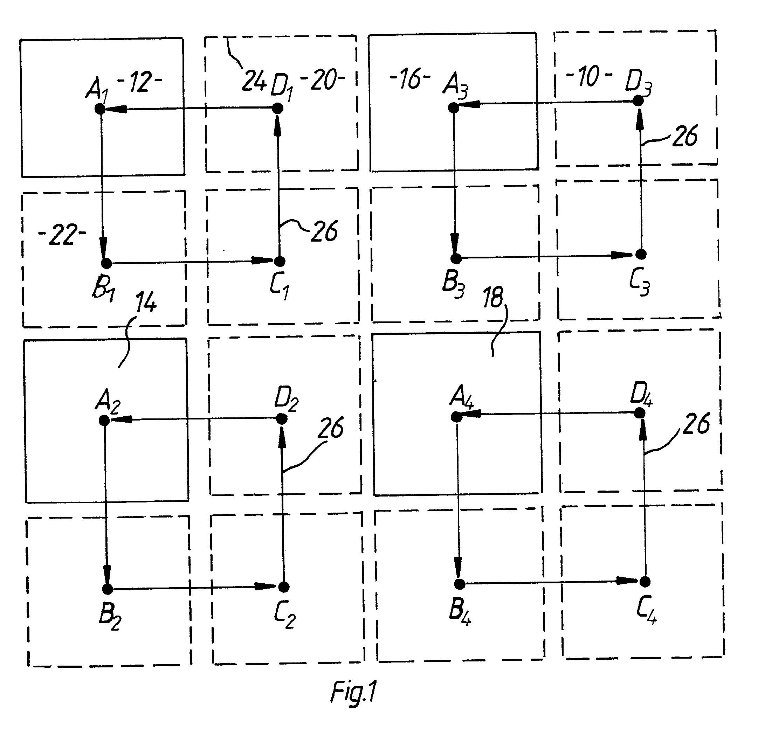

In Fig. 1 ist ein Ausschnitt eines Mosaik-Detektors 10 dargestellt. Es handelt sich dabei um einen ladungsgekoppelten Bauteil, von dem vier Detektorelemente 12, 14, 16 und 18 dargestellt sind. Die Detektorelemente 12, 14, 16, 18... sind in waagerechten Zeilen und senkrechten Spalten angeordnet. Zwischen den Zeilen und zwischen den Spalten sind Zwischenräume 20 bzw. 22 gebildet. Bei der dargestellten Ausführungsform sind die Breiten dieser Zwischenräume im wesentlichen gleich den Abmessungen der entsprechenden Seiten der rechteckigen Detektorelemente.

Das Gesichtsfeld, das auf diesem Mosaik-Detektor erzeugt wird, kann in Bildelemente 24 zerlegt werden, die in Fig. 1 gestrichelt dargestellt sind und die teils mit den Detektorelementen 12, 14, 16, 18 zusammenfallen und teils auf die Zwischenräume 20 und 22 fallen. Die Umsetzung des Gesichtsfeldbildes in ein « elektronisches » Bild durch die Detektorelemente 12, 14, 16, 18 führt bei einer starren Anordnung wegen der technisch notwendigen Zwischenräume 20 und 22 zu einem erheblichen Informationsverlust.

Um diesen Informationsverlust zu vermeiden sind Bildversatzmittel vorgesehen, durch welche das Gesichtsfeldbild zur Überdeckung der Zwischenräume 20, 22 periodisch längs einer geschlossenen Bahn relativ zu dem Mosaik-Detektor 10 verlagerbar ist. Diese relative Verlagerung kann durch eine Bewegung des Mosaik-Detektors erhalten werden. Vorteilhaft wird jedoch das Gesichtsfeldbild gegenüber dem stillstehenden Mosaik-Detektor 10 bewegt, wie unten noch beschrieben wird. In Fig. 1 ist jedoch der leichteren Darstellung halber die Bewegung der Detektorelemente 12, 14, 16, 18 zu den in der Papierebene festen Bildelementen 24 dargestellt. Jedem Detektorelement 12, 14, 16 und 18 sind vier Bildelemente 24 des Gesichtsfeldbildes zugeordnet, die mit $A_1$, $B_1$. $C_1$, $D_1$ bzw. $A_2$, $B_2$, $C_2$, $D_2$ ; $A_3$, $B_3$, $C_3$, $D_3$ und $A_4$, $B_4$, $C_4$, $D_4$ bezeichnet sind. Das Gesichtsfeldbild nimmt vier verschiedene Stellungen ein. In der dargestellten ersten Stellung erfaßt das Detektorelement 12 das Bildelement $A_1$ das Detektorelement 14 das Gesichtsfeldelement $A_2$, das Detektorelement 16 das Bildelement $A_3$ und das Detektorelement 18 das Bildelement $A_4$. In der zweiten Stellung des Gesichtsfeldbildes erfaßt das Detektorelement 12 das Bildelement $B_1$. In der dritten Stellung des Gesichtsfeldbildes erfaßt das Detektorelement 12 das Bildelement $C_1$, und in der vierten Stellung des Gesichtsfeldbildes erfaßt das Detektorelement 12 das Bildelement $D_1$. In entsprechender Weise erfaßt das Detektorelement 14 nacheinander die Bildelemente $B_2$, $C_2$ und $D_2$ usw. Man erkennt, daß auf diese Weise im Verlauf eines Zyklus alle Bildelemente 24 von den Detektorelementen 12, 14, 16, 18 usw. erfaßt werden. Es ist hier, wie gesagt, die Bewegung der Detektorelemente 12, 14, 16, 18 gegenüber dem Gesichtsfeldbild dargestellt, die geschlossenen Bahnen 26 im Gegenuhrzeigersinn folgen. Tatsächlich führt bei der dargestellten Ausführungsform jedes Bildelement eine Bewegung längs einer geschlossenen Bahn im Uhrzeigersinn gegenüber den stillstehenden Detektorelementen 12, 14, 16, 18 aus.

Die von den Detektorelementen 12, 14, 16, 18 gelieferten Bildinformationen, die mehreren Punkten der letztgenannten geschlossenen Bahn entsprechen, werden auf Speichermittel aufgeschaltet. In diesen Speichermitteln ist nach jedem Zyklus eine im wesentlichen lückenlose Bildinformation über das Gesichtsfeld gespeichert. Aus den so gespeicherten Bildinformationen wird ein hochaufgelöstes elektronisches Bild für die digitale Bildverarbeitung erzeugt.

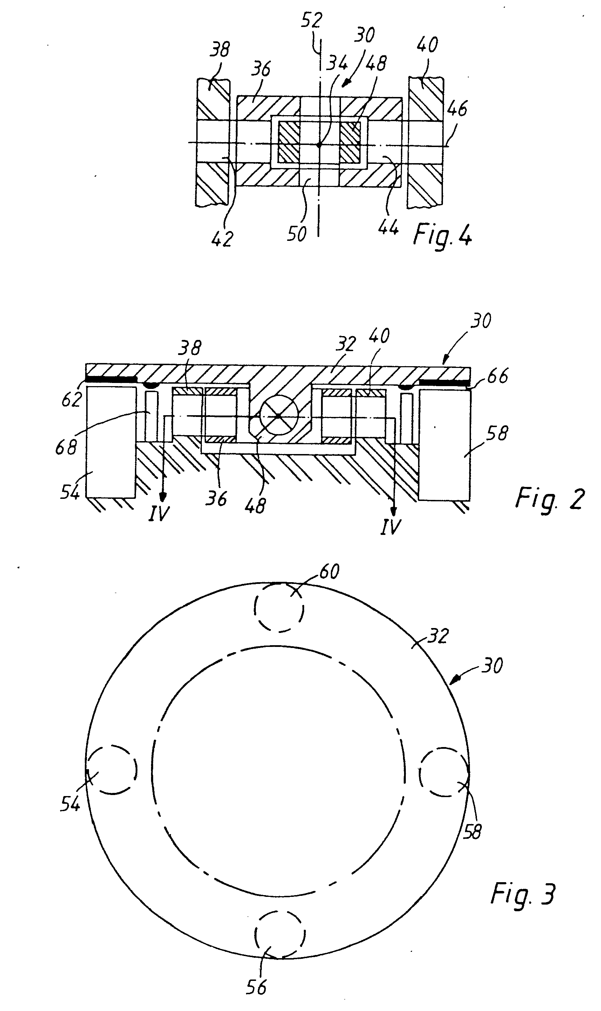

In Fig. 2 bis 4 ist eine Ausführung von Bildversatzmitteln 30 dargestellt, durch welche das Gesichtsfeld periodisch längs einer geschlossenen Bahn relativ zu dem Mosaik-Detektor 10 verlagerbar ist. Diese Bildversatzmittel 30 sind zur Erzeugung einer schrittweisen Bewegung des Gesichtsfeldbildes längs der besagten geschlossenen Bahn eingerichtet. Sie enthalten einen in dem abbildenden optischen System angeordneten Spiegel 32. Der Spiegel 32 ist kardanisch gelagert, kann also nach allen Seiten um einen Schwenkpunkt 34 geneigt werden. Ein Kardanrahmen 36 ist in gehäusefesten Lagerböcken 38, 40 über zwei zweiteilige Kreuzfedergelenke 42 und 44 um eine Achse 46 kippbar gelagert. Der Spiegel 32 ist mit einem Ansatz 48 über ein dreiteiliges Kreuzfedergelenk 50 um eine Achse 52 kippbar gelagert. Die beiden Achsen 46 und 52 schneiden sich in dem Schwenkpunkt 34.

Um den Schwenkpunkt 34 herum sind vier um 90° gegeneinander winkelversetzte Elektromagnete 54, 56, 58, 60 angeordnete. Durch die Elektromagnete 54, 56, 58, 60 sind Momente auf den Spiegel 32 ausübbar zur Erzeugung einer Neigung des Spiegels 32. Zu diesem Zweck sind an dem Spiegel 32 ferromagnetische Anker 62, 66... gegenüber den Magneten 54 bzw. 58 usw. angebracht. Die Anker 62, 66... kommen jedoch nicht an den Magneten 54, 56, 58, 60 zur Anlage. Es ist vielmehr auf der Rückseite des Spiegels 32 um den Kardanrahmen 36 und die Lagerböcke 38, 40 herum ein ringförmiger Anschlag 68 vorgesehen, an welchem der Spiegel 32 bei seiner nutierenden Bewegung von einer Stellung zur anderen abrollt.

Es ist eine (nicht dargestellte) Ansteuerschaltung vorgesehen, durch welche für jede Stellung des Spiegels 32 nacheinander jeweils ein Paar benachbarter Elektromagnete, z. B. 54 und 56, erregbar ist. Dabei wird durch die Ansteuerschaltung bei der Umschaltung von einer Stellung zur nächsten jeweils ein Elektromagnet, z. B. 56, des zuletzt erregten Paares, z. B. 54, 56, erregt gehalten. Der andere Elektromagnet 54 dieses Paares, der auf einer Seite des erregt gehaltenen Elektromagneten 56 sitzt, wird abgeschaltet. Mit Verzögerung nach dieser Abschaltung wird der Elektromagnet 58 auf der anderen Seite erregt. Im stabilen Endzustand sind jeweils zwei Elektromagnete erregt. Der Spiegel 32 ist nach links oben, links unten, rechts unten oder rechts oben geneigt. Das entspricht beispielsweise den verschiedenen Stellungen des Detektorelements 12 relativ zu den Bildelementen $A_1$, $B_1$, $C_1$ und $D_1$.

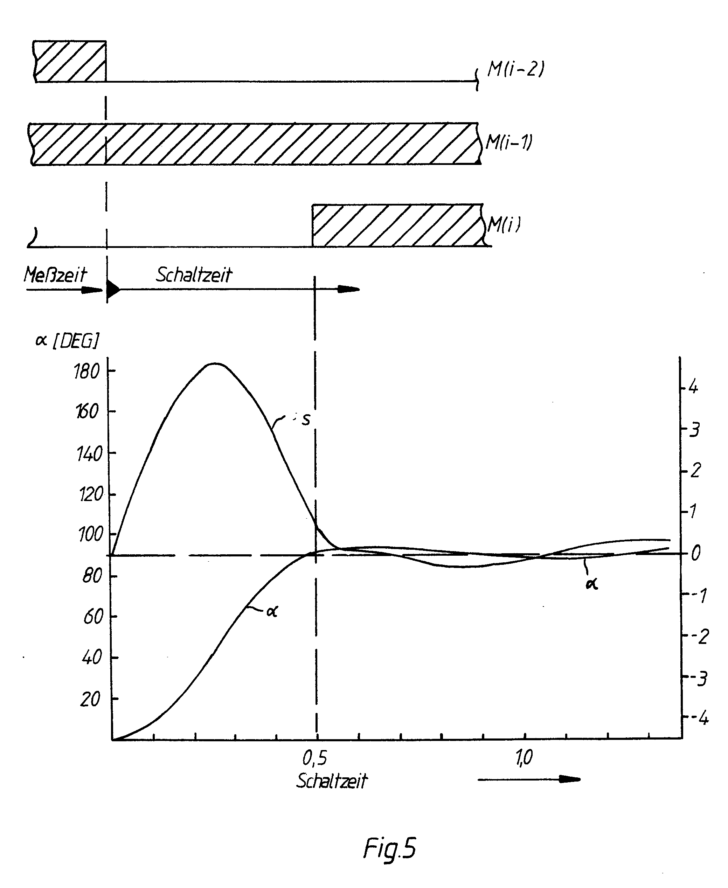

Die zeitliche Abfolge der Schaltvorgänge bei dem Umschaltvorgang ist in Fig. 5 dargestellt. Es ist oben die Schaltung der verschiedenen Elektromagnete M(i-2), M(i-1) und M(i), also beispielsweise 54, 56 und 58, als Funktion der Zeit dargestellt und darunter ebenfalls als Funktion der Zeit die Winkelgeschwindigkeit $\omega_s$ des nutierenden Spiegels 32 und der Nutationswinkel $\alpha$. Man erkennt, daß der Elektromagnet M(i) erst mit einer Verzögerung von 0,5 Millisekunden nach dem Abschalten des Elektromagneten M(i-2) erregt wird. Durch diese Maßnahme und das Abrollen des Spiegels 32 an dem ringförmigen Anschlag 68 wird erreicht, daß der Spiegel 32 sich ohne Überschwingungen in seine neue Stellung einstellt. Der Spiegel 32 wird jeweils sehr schnell von einer Stellung in die andere bewegt (Schaltzeit) und bleibt dann für eine relativ lange Meßzeit in dieser Stellung, bis die Fortschaltung in die nächste Stellung eingeleitet wird.

Die Ansteuerschaltung arbeitet nach folgendem Schema

Elektromagnet

| Stellung | 54 | 56 | 58 | 60 |
|----------|----|----|----|----|
| 2 | L | L* | O | O |
| 3 | O | L | L* | O |
| 4 | O | O | L | L* |
| 1 | L* | O | O | L |
| 2 | L | L* | O | O |

Dabei bedeutet « L = jeweils Erregung, « O » Nichterregung und « L* » Erregung mit Zeitverzögerung gemäß Fig. 5.

**Patentansprüche**

1. Elektrooptisches Detektorsystem zur Erzeugung elektronischer Bildinformation, enthaltend :

(a) einen ladungsgekoppelten Mosaikdetektor (10), der eine Mehrzahl von rechteckigen Detektorelementen (12, 14, 16, 18) mit ersten und zweiten Seiten aufweist, welche in Spalten parallel zu den ersten Seiten und Zeilen parallel zu den zweiten Seiten angeordnet sind,

(b) wobei die Detektorelemente (12, 14 bzw. 16, 18) jeder Spalte erste Zwischenräume bilden, deren Breite im wesentlichen gleich der Länge der besagten ersten Seiten ist, und

(c) die Detektorelemente (12, 16 bzw. 14, 18) jeder Zeile zweite Zwischenräume bilden, deren Breite im wesentlichen gleich der Länge der besagten zweiten Seiten ist,

(d) ein abbildendes optisches System zur Erzeugung eines Bildes eines Gesichtsfeldes auf dem Mosaikdetektor (10), so daß jedes der Detektorelemente eine Bildinformation liefert,

(e) Bildversatzmittel (30), welche periodisch auf die Abbildungsmittel wirken und durch welche das Bild relativ zu dem Mosaikdetektor (10) längs einer geschlossenen Bahn (26) bewegbar ist, dadurch gekennzeichnet, daß

(f) das Bild durch die Bildversatzmittel (30) längs einer rechteckigen Bahn (26) derart bewegbar ist, daß jeder Punkt des Bildes während jeder Periode relativ zu dem Mosaikdetektor (10) schnell von jeweils einer Ecke (A₁, B₁, C₁, D₁...) eines Rechtecks, dessen Seiten gleich und parallel zu den besagten ersten und zweiten Seiten sind, zu einer benachbarten Ecke bewegt und dann zwischen diesen Bewegungen jeweils für eine Zeitspanne, die wesentlich länger als die für die besagte Bewegung erforderliche Zeit ist, stillstehend gehalten wird,

(g) die Bildversatzmittel (30)

- einen in dem abbildenden optischen System angeordneten kardanisch gelagerten Spiegel (32) aufweisen sowie

- vier um 90° winkelversetzt um einen zentralen Schwenkpunkt (34) des Spiegels (32) herum angeordnete Elektromagnete (54, 56, 58, 60), durch welche Drehmomente zur Erzeugung einer Neigung des Spiegels (32) ausübbar sind, und

- eine Ansteuerschaltung zur aufeinanderfolgenden Erregung von jeweils einem Paar von benachbarten Elektromagneten zur Verlagerung des Spiegels (32) und zur Halterung des Spiegels in den gewünschten Lagen und

(h) auf der Rückseite des Spiegels (32) ein ringförmiger Anschlag (68) vorgesehen ist, auf dem der Spiegel (32) bei seiner nutierenden Bewegung von einer Stellung zur anderen abrollt.

2. Elektrooptisches Detektorsystem nach Anspruch 1, dadurch gekennzeichnet, daß durch die Ansteuerschaltung bei der Umschaltung von einer Stellung zur nächsten

- jeweils ein Elektromagnet (56) des zuletzt erregten Paares (54, 56) erregt gehalten wird,

- der andere Elektromagnet (54) dieses Paares, der auf einer Seite des besagten erregt gehaltenen

4

Elektromagneten (56) sitzt, abgeschaltet und

- mit Verzögerung nach dieser Abschaltung der Elektromagnet (58) auf der anderen Seite erregt wird.

**Claims**

1. Electro-optical detector system for generating electronic image information, comprising :

(a) a charge-coupled mosaic detector (10), which has a plurality of rectangular detector elements (12, 14, 16, 18) having first and second sides and being arranged in columns parallel to the first sides and in lines parallel to the second sides,

(b) the detector elements (12, 14 and 16, 18, respectively) of each column forming first interstices, the width of which is substantially equal to the length of said first sides, and

(c) the detector elements (12, 16 and 14, 18, respectively) of each line forming second interstices, the width of which is substantially equal to the length of said second sides,

(d) an imaging optical system for generating an image of a field of view on the mosaic detector (10), such that each of the detector elements supplies image information,

(e) image offset means (30) acting periodically on the imaging means and adapted to displace the image along a closed trajectory (26) relative to the mosaic detector (10), characterized in that

(f) the image offset means (30) are adapted to displace the image along a rectangular trajectory (26), such that, during each period, each point of the image is quickly displaced relative to the mosaic detector (10) from one corner ($A_1$, $B_1$, $C_1$, $D_1$...) of a rectangle, the sides of which are equal and parallel to said first and second sides, to an adjacent corner and then is kept stationary between these displacements during a period of time, which is considerably longer than the time required for said displacement,

(g) the image offset means (30) comprise

- a gimbal suspended mirror (32) arranged in the image optical system,

- four electromagnets (54, 56, 58, 60) angularly offset by 90 and arranged around a central pivotal point (34) of the mirror (32), which are adapted to exert torques for providing an inclination of the mirror (32), and

- an energizing circuit adapted to consecutively energize one pair of adjacent electromagnets for displacing the mirror (32) and for supporting the mirror in the desired positions, and

(h) annular stop means (68) are provided on the back side of the mirror (32), the mirror (32) rolling on said stop means during its nutating movement from one position to another.

2. Electro-optical detector system as set forth in claim 1, characterized in that the energizing circuit, when changing over from one position to the next, is adapted to

- keep one electromagnet (56) of the last energized pair (54, 56) energized,

- de-energize the other electromagnet (54) of this pair, which is located on one side of said electromagnet (56) kept energized, and

- energize the electromagnet (58) on the other side with delay after this de-energization.

**Revendications**

1. Système de détecteur-électro-optique destiné à engendrer de l'information d'image électronique, comprenant

(a) un détecteur de mosaïque (10) à accouplement de charge, qui a une pluralité d'éléments de détecteur rectangulaires (12, 14, 16, 18) ayant premiers et deuxièmes côtés et étant disposés dans des colonnes parallèles aux premiers côtés et dans des lignes parallèles aux deuxièmes côtés,

(b) les éléments de détecteur (12, 14 et 16, 18, respectivement) de chaque colonne formant premiers interstices dont la largeur est essentiellement égale à la longueur desdits premiers côtés, et

(c) les éléments de détecteur (12, 16 et 14, 18, respectivement) de chaque ligne formant deuxièmes interstices dont la largeur est essentiellement égale à la longueur desdits deuxièmes côtés, et

(d) un système optique reproduisant destiné à engendrer un image d'un champ de vision sur le détecteur de mosaïque (10), de sorte que chacun des éléments de détecteur fournit une information d'image,

(e) des moyens de déplacement d'image (30) agissant périodiquement sur les moyens de reproduction et par lesquels l'image est déplaçable relativement au détecteur de mosaïque (10) le long d'une trajectoire fermée (26), caractérisé par le fait que

(f) l'image est déplaçable par les moyens de déplacement d'image (30) le long d'une trajectoire rectangulaire (26) de sorte que, lors de chaque période, chaque point de l'image est rapidement déplacé relativement au détecteur de mosaïque (10) d'un coin ($A_1$, $B_1$, $C_1$, $D_1$...) d'un rectangle, dont les côtés sont égaux et parallèles auxdits premiers et deuxièmes côtés, à un coin adjacent, et est ensuite maintenu

5

stationnairement entre ces déplacements pour un délai qui est considérablement plus long que le temps exigé pour ledit déplacement,

(g) les moyens de déplacement d'image (30) ont

- un miroir (32) suspendu cardaniquement et disposé dans le système optique reproduisant, ainsi que

- quatre électro-aimants (54, 56, 58, 60) angulairement décalés de 90° et disposés autour d'un point de pivotement central (34) du miroir (32), qui sont disposés à exercer des couples pour prévoir une inclinaison du miroir (32), et

- un circuit d'excitation destiné à exciter successivement une paire d'électro-aimants à la fois afin de déplacer le miroir (32) et de le monter dans les positions désirées, et

(h) une butée annulaire (68) est prévue sur le revers du miroir (32), sur quelle butée le miroir (32) roule d'une position à l'autre lors de mouvement de nutation.

2. Système de détecteur électro-optique selon la revendication 1, caractérisé par le fait que par le circuit d'excitation lors du renversement d'une position à la position suivante,

- un électro-aimant (56) à la fois de la paire dernièrement excitée (54, 56) est maintenu en état excité,

- l'autre électro-aimant (54) de cette paire, qui est situé sur un côté dudit électro-aimant (56) maintenu en état excité, est mis hors circuit,

- avec retardement après cette mise hors circuit, l'électro-aimant (58) sur l'autre côté est excité.

Fig.1

EP 0 133 890 B1

Fig. 4

Fig. 2

Fig. 3

2

Fig.5